Europäisches Patentamt

European Patent Office

Office européen des brevets

(11) Publication number:  **0 363 813 B1**

# EUROPEAN PATENT SPECIFICATION

(45) Date of publication of patent specification: **16.02.94**   (51) Int. Cl.⁵: **C08F 8/12,** C08F 218/08,
B32B 17/00, B32B 27/00,
//(C08F218/08,210:02,216:06)

(21) Application number: **89118448.3**

(22) Date of filing: **04.10.89**

(54) Terpolymer and transparent laminate having excellent optical properties.

(30) Priority: **06.10.88 JP 250802/88**
**21.06.89 JP 156718/89**
**21.06.89 JP 156719/89**

(43) Date of publication of application:
**18.04.90 Bulletin  90/16**

(45) Publication of the grant of the patent:
**16.02.94 Bulletin  94/07**

(84) Designated Contracting States:
**DE FR GB IT**

(56) References cited:
**EP-A- 0 140 068**
**EP-A- 0 146 138**
**FR-A- 2 236 878**
**GB-A- 1 190 018**
**US-A- 3 378 515**

(73) Proprietor: **SHOWA DENKO KABUSHIKI**
**KAISHA**
**10-12, Shiba Daimon 2-chome**
**Minato-ku**
**Tokyo(JP)**

(72) Inventor: **Kurosawa, Shigeru c/o Showa Denko K.K.**
**Oita Research Laboratory**
**2, Oaza Nakanosu**
**Oita-shi Oita(JP)**
Inventor: **Iwashita, Toshiyuki c/o Showa Denko K.K.**
**Oita Research Laboratory**
**2, Oaza Nakanosu**
**Oita-shi Oita(JP)**
Inventor: **Nagaoka, Takashi c/o Showa Denko K.K.**
**Oita Research Laboratory**
**2, Oaza Nakanosu**
**Oita-shi Oita(JP)**
Inventor: **Saito, Shigeki c/o Showa Denko K.K.**
**Oita Research Laboratory**
**2, Oaza Nakanosu**
**Oita-shi Oita(JP)**

(74) Representative: **Türk, Gille, Hrabal, Leifert**
**Brucknerstrasse 20**
**D-40593 Düsseldorf (DE)**

**Description**

BACKGROUND OF THE INVENTION

1. Field of the Invention

The present invention relates to a terpolymer, a cross-linked terpolymer and a transparent laminate having excellent optical properties. More particularly, it is concerned with a terpolymer of an extremely limited composition comprising ethylene/vinyl acetate/vinyl alcohol, and a cross-linked product and a cross-linked sheet having excellent optical properties and mechanical strength, formed by corss-linking said terpolymer. Further, the present invention relates to a transparent laminate formed by sandwiching the above terpolymer, cross-linked product, or cross-linked sheet between a plural number of glass plates or transparent synthetic resin plates. These terpolymer, cross-linked product, and cross-linked sheet exhibit extremely high quality characteristics desired for an intermediate layer of a composite glass (laminated glass). Also, the above-described transparent laminate has excellent transparency and mechanical strength in a wide temperature range, and exhibits extremely high quality characteristics in a windshield or a front glass of an automobile, a composite glass for architectural use, or a substitute thereof.

2. Description of the Related Arts

In recent years, accompanying the improvement of the safety level of an automobile, the primary concern of the front glass has become assuring the safety of the automobile occupants. Accompanying such a trend of this era, every country in the world actually uses resin-reinforced plural layer safety glass, and its use is becoming required by law.

At present, there are extremely severe standards for the safety glass materials used in the front glass of an automobile, and, for example, in Japan it also is specified in the standard of JASO (Japan Automobile Standards Organization). It is an extremely difficult proposition to satisfy this standard, while keeping costs to a minimum.

The requirement for such a material which can protect the automobile occupants of their safety, and which also can be produced economically and efficiently, has now prevailed throughout the world.

Up to the present, as the material of the intermediate layer of the composite glass for automobile use, polyvinyl butyral is used almost exclusively. Although this material has excellent transparency and high penetration resistance in the vicinity of room temperature, these characteristics are not necessarily satisfactory. Although this polyvinyl butyral shows high penetration resistance in the vicinity of room temperature, the resistance is not necessarily satisfactory in the temperature range of less than 0°C, or in the temperature range of more than 80°C. Also, since a large amount of a plasticiser must be added for softening, this addition causes accompanying problems.

The terpolymer of ethylene/vinyl acetate/vinyl alcohol (EVAVAL) is already known as a laminate material usable for glass and/or transparent synthetic resin, which has excellent characteristics at low temperature.

In the Specification of the U.S. Patent No. 3,932,757, there is disclosed a peroxide cross-linked EVAVAL. Also, in the Specification of U.S. Patent No. 3,378,515, there is disclosed the EVAVAL cross-linked with aromatic diisocyanate.

Further, in the Specification of U.S. Patent No. 4,137,364, there is disclosed an adhesive film cross-linked by heating the EVAVAL which has the OH content of 1 to 6% by weight, obtained by saponifying the ethylene/vinyl acetate copolymer having a vinyl acetate unit content of 40 to 60% by weight, in the presence of a specified cross-linking agent, or by means of electron bombardment. Also said material is described to have excellent characteristics in broad range of temperature, but there is disclosed no data which necessarily supports the fact sufficiently.

According to the description of these Specifications of U.S. Patents, the EVAVAL cross-linked product is said to be a useful material, since it can be used in a wide temperature range and has excellent characteristics from low to high temperatures. However, this EVAVAL cross-linked product has not yet attained wide use in industry as a laminated material in safety glass. The reason probably is that, in the case of a laminated glass material having two glass sheets on both sides of an EVAVAL interlayer, the material does not have sufficient penetration resistance or enough transparency.

There is a detailed report, for example, in the Journal of Polymer Science, part A-1, Vol.9, P.3083 to 3103, on the physical property behaviour of the ethylene/vinyl acetate copolymer and the complete saponified product thereof and on the relationship between the copolymer composition of the copolymer of ethylene and vinyl acetate or vinyl alcohol, and the physical properties corresponding thereto.

However, it is almost impossible to estimate the physical properties of a terpolymer such as the EVAVAL from this report, and actually at present, there are comparatively few findings on the relationship between the structure and physical properties of this EVAVAL.

The present inventors have eagerly investigated improving EVAVAL, which is a material comparatively easy to be acquired in the market, but at present does not satisfy the strong need for a material that is excellent as an intermediate layer (laminate layer) of glass/glass such as described above, and especially a material having high penetration resistance, transparency and suitable adhesive characteristics for use in laminated safety glass. In particular, on the EVAVAL, the relationship between the method for production thereof, the structure, and the physical properties have been deeply investigated. In the case of safety glass having two glass sheets on both sides of interlayer, in spite of the fact that a high molecular material as the intermediate layer between glass and glass is easily expected to fulfil an extremely important role, the details thereof are not yet much clear.

The present inventors have repeated investigation on the characteristics of the EVAVAL, especially by noticing the fact that an increase of the tensile strength at break is connected to an increase of the energy required to break the material, and it was found that this fact is also connected to an improvement of the penetration resistance of the laminated composite glass.

However, it was found out that such improvement of the penetration resistance, in the case when the EVAVAL is used as an intermediate layer in the front glass which is required to have high transparency, also results in an undesirable peculiar optical behaviour in the EVAVAL at the same time.

For example, in the case of the EVAVAL, when the temperature cycles were repeatedly effected between 20 to 130°C and the transparency was observed, there occurred a peculiar phenomenon. As for a terpolymer of a certain definite composition, although a remarkable change of the optical properties could not be perceived during the heating procedure, the haze value increased rapidly in a specified narrow temperature range during the cooling procedure, when the terpolymer was cooled further, it became transparent again. As to the peculiar haze behaviour found here, there is almost no knowledge hitherto, and for example, in the Specification of U.S. Patent No. 4,137,364, any comment is not mentioned at all.

Such a peculiar haze behaviour as described above has been found to be observed in the EVAVAL having a comparatively high vinyl alcohol content which is required for giving high mechanical strength to the EVAVAL, although it is not observed either in the ethylene/vinyl acetate copolymer (EVA) before being subjected to hydrolysis, or in the EVAVAL of comparatively low hydrolysis ratio. On the other hand, it was found that EVAVAL suitable as the intermediate layer for improving penetration resistance of a composite glass, has high vinyl alcohol content.

In the Specification of U.S. Patent No. 4,137,364, there is a description that the material cross-linked by means of electron bombardment has wide range of use temperatures and excellent characteristics in comparison with conventional material. However, the Examples disclosed herein are limited to the examples of the EVAVAL having comparatively low vinyl alcohol content only, and there can be found no description concerning such a peculiar optical behaviour as described above. That is, this peculiar optical behaviour is a quite novel phenomenon which can not be presumed at the time of accomplishment of the invention in the U.S. Patent No. 4,137,364.

On the opportunity of such an unpresumed finding, the present inventors have further advanced the research in order to develop a material capable of satisfying such an extreme request for the composite glass intermediate layer for use of the front glass of an automobile, and investigated the characteristics of the EVAVAL from many aspects.

As a result, it has been found out that the EVAVAL of a limited structural range, obtained by partially saponifying an ethylene/vinyl acetate copolymer having an extremely limited structural range as a starting raw material or the cross-linked one thereof, has very excellent characteristics as the intermediate layer (intermediate film) of plural number of transparent plates comprising glass plates or synthetic resin plates. The present invention has been completed on the basis of such findings.

## SUMMARY OF THE INVENTION

An object of the present invention is to provide a terpolymer excellent in optical characteristics.

Another object of the present invention is to provide a cross-linked material of the terpolymer, and a cross-linked sheet which have excellent optical properties and mechanical strength.

Still another object of the present invention is to provide a transparent laminate having excellent transparency and strength in a broad temperature range, and suitable to the front glass or the like of an automobile.

The present invention provide a terpolymer of ethylene/vinyl acetate/vinyl alcohol obtained by uniformly partially saponifying the ethylene/vinyl acetate copolymer and

(A) said copolymer is defined as:

(1) the content of the unit derived from vinyl acetate is 46 to 53 wt%;

(2) the MFR is 1 to 20 g/10 minute, (wherein MFR is a melt flow rate measured at 190°C according to JIS K 7210 Condition 4);

(3) polydispersion index, Mw/Mn, is not more than 4.0 (wherein Mw shows weight average molecular weight and Mn shows number average molecular weight);

(4) the comonomer distribution ratio of the ethylene chain in the triad, measured by the nuclear magnetic resonance method of the isotope carbon $^{13}$C is not more than 50 mol%; and

(B) said terpolymer is defined as:

(5) the content of the unit derived from vinyl alcohol is 12.4 to 15.2 wt%;

(6) it is substantially amorphous, and the enthalpy of fusion ( $\Delta$Hm) is not more than 0.5 cal/g. (1 cal = 4.184J)

This terpolymer of the present invention has excellent optical properties.

Also, the present invention provides a transparent laminate sandwiching the above-described terpolymer between plural number of transparent materials comprising glass plates and/or synthetic resin plates, sheets or films.

## DESCRIPTION OF THE PREFERRED EMBODIMENTS

The structure and composition of the ethylene/vinyl acetate copolymer can be characterised as described above by (1) the content of the unit derived from the vinyl acetate in the copolymer, (2) melt flow index (MFR), (3) polydispersion index (Mw/Mn), and (4) the comonomer distribution obtained by the nuclear magnetic resonance ($^{13}$C-NMR) method of the isotope carbon $^{13}$C.

Here, (1) the content of the unit (vinyl acetate unit) derived from vinyl acetate in the copolymer is 46 to 53 wt%, and preferably, 48 to 52 wt%. When a copolymer having the content of the vinyl acetate unit of less than 46 wt% is used as the starting raw material, the terpolymer obtained can not attain the object of the present invention from two aspects. One of them is that, since its mechanical strength is insufficient, the penetration resistance is insufficient in the case when it is laminated with glass and/or synthetic resin, in spite of the fact that it is sufficient in respect of the transparency. The other one is that, although it is sufficient in respect of the strength, it can not satisfy the transparency in a broad temperature range. In any case, it is unable to sufficiently satisfy both the strength and transparency over a broad temperature range.

On the other hand, when using copolymer having the vinyl acetate unit content exceeding 53 wt%, a terpolymer satisfying the haze characteristics can be obtained, but it is poor in penetration resistance.

Next, (2) the MFR (measured at 190°C) of the copolymer is 1 to 20 g/10 minutes, and preferably 2 to 12 g/10 minutes. When the MFI exceeds 20 g/10 minutes, it is difficult to satisfy the penetration resistance, while satisfying the haze characteristics of the terpolymer (EVAVAL) or its cross-linked material thereof, obtained by partially saponifying the copolymer. The MFI of the copolymer as the starting raw material gives extremely large influence to the impact strength of the terpolymer obtained from the copolymer, or the corss-linked material thereof.

Also, (3) the Mw/Mn which is the polydispersion index of the ethylene/vinylacetate copolymer is 4.0 or less, and preferably 2.5 to 3.0. When the Mw/Mn exceeds 4.0, it is extremely difficult to balance the penetration resistance and the haze characteristics.

Further, it is important that, (4) in the comonomer distribution ratio obtained by the $^{13}$C-NMR method, the ratio of the ethylene chain in the triad (that is, the partial ratio of ethylene-ethylene-ethylene (EEE)) is 50 mol% or less, and preferably less than 45 mol%. If the ratio of the EEE chain of the copolymer exceeds 50 mol%, it becomes extremely difficult to satisfy the haze characteristics, though a terpolymer satisfying the penetration resistance or the cross-linked material thereof can be produced from the copolymer.

The ethylene/vinyl acetate copolymer satisfying extremely limited conditions can be produced by the high pressure copolymerization method and the solution copolymerization method, but the one produced by the high pressure copolymerization method is preferable, and it is particularly preferable carried out under a pressure of 1500 to 3000 kg/cm$^2$.

The terpolymer of the present invention is obtained by uniformly partially saponifying the ethylene/vinyl acetate copolymer having the above-described characteristics (1) to (4).

Also, (5) the degree of this saponification should be in the range where the content of the unit derived from vinyl alcohol becomes 12.4 to 15.2 wt%. When the vinyl alcohol unit content exceeds 15.2 wt%, the strength is sufficient, but the haze characteristics is insufficient in many cases.

That is, when the vinyl alcohol unit content becomes too high, in the case when the temperature of the terpolymer or the cross-linked material thereof is heated to about 130°C and then gradually cooled, there is a temperature range wherein the haze rapidly increases in the procedure of lowering the temperature. Also, a cross-linked sheet having excellent haze characteristics can be obtained when using a copolymer having the vinyl alcohol content of less than 12.4 wt%. But, in the case when the cross-linked sheet thus obtained was laminated on glass, the resulting laminate does not have high penetration resistance. A more objective index for determining the minimum limit value of this vinyl alcohol content is the vinyl alcohol unit content capable of maintaining the tensile breaking strength of the terpolymer at 200 kg/cm$^2$ even in the lowest case.

Also, (6) the terpolymer of the present invention is substantially amorphous, and the objective standard thereof shows the value of the enthalpy of fusion ($\Delta$Hm) of 0.5 cal/g or less as measured by the DSC (the differential scanning calorimeter).

The terpolymer having $\Delta$Hm higher than 0.5 cal/g shows poor transparency in temperatures below 120°C or less processability at mild temperatures.

The terpolymer of the present invention has such characteristics as described above. Although there are various methods for the production thereof, preferable method is to partially saponify the above-described copolymer in a uniform solution state in the presence of a solvent. Typical examples of these methods include hydrolysis method and transesterification method in the presence of acid or an alkali catalyst.

For example, uniform partial saponification can be attained comparatively easily by effecting the transesterification in the presence of acid or alkali as the catalyst in a mixed solvent comprising the good solvent of both the copolymer as the starting substance and the EVAVAL, and alcohol, and which resulting mixture dissolves both of the copolymer and the EVAVAL.

In order to obtain the terpolymer having excellent optical characteristics, it is important that both the ethylene/vinyl acetate copolymer used in saponification and the terpolymer formed by the partial saponification are preserved in a homogeneous solution state. When the saponification reaction is effected in a nonuniform or heterogeneous state, the terpolymer obtained becomes heterogeneous in structure, and particularly, in the case when it has been cross-linked, it becomes difficult to satisfy both the optical characteristics and the strength.

The reason why the terpolymer of the present invention can not be obtained by the above heterogeneous saponification reaction, is not necessarily clear, but can be presumed as follows. For example, when the alkali saponification is effected by dispersing the pellets of the ethylene/vinyl acetate copolymer in a solution such as methanol, even if the degree of saponification as a whole has been attained to the objective value, saponification proceeds much more at the surface part of the pellet, and less in the inner part of the pellet. The terpolymer thus obtained (EVAVAL) is an EVAVAL having extremely broad composition distribution, and it is not only inferior in temperature dependency of haze, but also it does not become so high in strength.

The terpolymer (EVAVAL) of the present invention is soft, and it has high strength at break of more than 200 kg/cm$^2$. Also, it has such a feature that the change of the optical characteristics are little in a broad temperature range, and its haze value is less than 1 in the temperature range of 20 to 130°C. The terpolymer, even if not cross-linked, shows excellent strength and optical characteristics. Also as it contains unit derived from high volume of vinyl alcohol, it is very useful as interlayer material (interlayer film) for transparent laminated plate in which the interlayer is sandwiched between a plural number of transparent glass and/or synthetic resin. It is useful as an intermediate layer material for a laminated plate having both surface layers of glass and synthetic resin, or synthetic resin and synthetic resin, which are not requested to have too severe thermal resistance.

The terpolymer (EVAVAL) of the present invention becomes more excellent not only in the optical characteristics but also in the strength, when it is cross-linked. A laminate having excellent transparency over a broad temperature range can be obtained when the terpolymer is sandwiched between a plural number of transparent material comprising glass plates and/or synthetic resin plates, sheets or films. Further when this terpolymer is cross-linked, it becomes excellent not only in optical characteristics, but more excellent also in the strength. Moreover, it becomes an intermediate layer showing high quality characteristics in much broader temperature range. The terpolymer described above can be used as interlayer material without cross-linking, but when cross-linked, above characteristics become even clearer.

The cross-linked terpolymer can be formed into a transparent laminate with enhanced strength when interlaid between plural number transparent glass plate and/or synthetic resin plates, sheets or films. As described above, the terpolymer of the present invention shows excellent characteristics whether cross-linked or not, but in the case when it is subjected to cross-linking, the degree of the cross-linking should be appropriately selected depending on various conditions such as the object of use, shape of the cross-linked product, and the like. For example, in the case when it is used by being sandwiched between a plural number of synthetic resin plates, since the ratio of the anti-penetration energy received by the intermediate layer is comparetively lightened, even the non-cross-linked terpolymer or the little cross-linked one can be applied for practical use. In this case, the degree of the cross-linking may be selected in correspondence to the impact resistance of the synthetic resin plate used, adhesive strength to the synthetic resin, and the like. Also, in such uses where high thermal resistance and high penetration resistance are not required at the same time, even the terpolymer being non-cross-linked or lightly cross-linked can be sufficiently used as a laminated glass sandwiched between a plural number of glass plates. In field where high quality characteristics are required such as in the laminated glass in an automobile, it is desirable to use the cross-linked material of the terpolymer.

As described above, although the degree of the cross-linking can be selected appropriately in correspondence to the object, it is preferably less than 90 wt% in the ratio of gel fraction, and more preferably, less than 80 wt%. For example, in the intermediate layer of the laminated glass in an automobile, it is preferable that the terpolymer is cross-linked to a high degree, and in this case, the degree of cross-linking is more than 50 wt%, and preferably, more than 55 wt% for maintaining high penetration resistance. Here, the ratio of gel fraction is a value obtained by effecting Soxhlet extraction with boiling toluene for 5 hours.

The cross-linking of the terpolymer can proceed with irradiating the ionizing radiation (electron rays. $\gamma$-rays, X rays, etc.), or by adding a cross-linking agent to said terpolymer to react. Among these ones, it is preferable to effect cross-linking by irradiating the ionizing radiation, in particular, the electron rays.

The sheet of the terpolymer thus obtained is excellent in optical characteristics, concretely, its haze measured in the temperature range of 20 to 130°C is 1 even in maximum, and preferably, less than 0.7. The cross-linked sheet in which the haze value exceeds 1 is not preferable, when it is used as a safety glass for the front glass of an automobile (or, the alternative material thereof), because it reflects the light from outside in the night driving which becomes the cause of making the driver's eyes tired. In order to be the cross-linked sheet having excellent penetration resistance, it is preferable to have the tensile breaking strength of more than 250 kg/cm$^2$, and especially, more than 300 kg/cm$^2$.

In case when such a cross-linked sheet is produced, said terpolymer is preferably molded into a sheet by a usual extrusion molding prior to cross-linking. Here, the molding temperature is 80 to 200°C, and preferably 100 to 150°C.

Such a cross-linked sheet as described above can be obtained by effecting cross-linking with irradiation of ionizing radiation such as the electron rays, after the terpolymer has been molded into a sheet by a usual extrusion molding means, or at the same time of the sheet molding. The thickness of said sheet is 0.2 to 1.0 mm. The exposure rate of the ionizing radiation is represented as the function of the irradiation time, and the total dosage is usually less than 30 megarad (M rad). When the primary object is to increase the strength of the cross-linked product, the total dosages in the range of 15 to 25 M rad is preferable, and about 20 M rad is most suitable. Since the increase of the dosage generally leads to the cost-increase of the cross-linked product, the total dosage should be determined depending on the required characteristics. In the case when the primary object is to increase the strength of the material, separately from the cost, and the ionizing radiation is irradiated, the more objective standard for the preferable dosage is in the vicinity where penetration energy value shows the maximum, when the cross-linked sheet has been put on a high speed impact tester to obtain the penetration energy. The exposure dose thus calculated plus or minus 3 M rad is the most suitable range.

When cross-linking proceeds to a suitable extent, the strength of the cross-linked sheet increases as cross-linking occurs, but on the other hand, the adhesiveness to the glass or synthetic resin tends to lower. Therefore, the most suitable degree of cross-linking for making a laminate is not necessarily determined by the strength of the material only, but the adhesiveness also becomes a base of the degree of cross-linking, and the degree of cross-linking should be determined by totally summarising these ones. An irradiation at dosages exceeding 30 M rad is not preferable, since not only the strength of the material lowers, but also the adhesiveness lowers.

The equipment for use in cross-linking, for example, the electron ray irradiating equipment is approximately characterised by the accelerating voltage of the electron rays, and the accelerating voltage is 200 to 1,000 kV. The accelerating voltage of 300 to 900 kV is preferable in order to carry out cross-linking uniformly from the surface to the inside of the sheet.

The transparent laminate of the present invention is formed by sandwiching the above-described terpolymer, the cross-linked product thereof or the cross-linked sheet between a plural number of glass plates and transparent synthetic resin plates, sheets or films. As there are various kinds of the glass plates

EP 0 363 813 B1

and synthetic resin extruded articles which can be used, the best selection may be suitably made in correspondence to uses and required characteristics. Examples of the glass include sheet glass, polished glass, float glass, sodalime glass, borosilicate glass, lead glass, quartz glass, phosphoric acid glass, zone-toughened glass, tempered glass, etc. As the synthetic resin, various one can be used as long as transparent. Examples of the synthetic resin include acryl resin, methacryl resin, polycarbonate resin, etc.

The glass plate and synthetic resin to be used in the present invention are effectively subjected to the treatment of washing, degreasing, etc., if necessary, or they can be made unevenness in the surface thereby increasing the contact area with the intermediate layer in order to improve the adhesiveness to the intermediate layer. Further, it is also effective to be subjected to primer treatment.

Various means may be used in producing the transparent laminate of the present invention. It can be obtained, for example, by making the above-described sheet-like terpolymer (EVAVAL) as it is, or after cross-linked by irradiating with the ionizing radiation, and then sandwiching it between the above-described two glass plates or synthetic resin to be adhered to each other.

The transparent laminate of the present invention has excellent optical characteristics such as transparency over a broad temperature range, and is effective for the safety glass such as the front glass of an automobile, laminated glass for architectural use, or the alternative product thereof. Also, the transparent laminate using the cross-linked product or the sheet of the terpolymer has excellent optical characteristics over a broad temperature range, as well as excellent mechanical strength, and is effectively used especially as the front glass or the alternate product thereof in an automobile.

Next, the present invention will be explained in more detail by referring to Examples and Comparative Examples.


Production Examples 1 to 3


(1) Preparation of Ethylene/Vinyl acetate/Vinyl alcohol Terpolymer

After uniformly dissolving the ethylene/vinyl acetate copolymer (EVA) (Mw/Mn = 2.7, comonomer distribution (triad EEE partial ratio) = 42.0 mol%, MFR = 2.8 g/10 minutes) of the vinyl acetate unit content of 52 wt% in a toluene/methanol mixed solvent (volume ratio = 1/1), while maintaining this uniform solution at 60°C, a predetermined amount of a methanol solution of sodium hydroxide was gradually added in a rate of such an extent that the deposition of the copolymer did not occur.

The reaction was continued for 3 hours below the boiling point of the mixed solvent, and after finishing the reaction, acetic acid of 1.1 times (molar ratio) of the sodium hydroxide used was added to the reaction mixture and stirring was continued for ten minutes. After cooling the reaction liquid to 40°C and adding a small amount of water, while stirring the reaction solution well, acetone of the volume equal to the solution was added to precipitate the polymer. After filtering the powder-like polymer precipitated, the polymer powder was sufficiently washed with an acetone/water mixed solvent and heated to be dried under reduced pressure to obtain an ethylene/vinyl acetate/vinyl alcohol terpolymer (EVAVAL) containing no solvent.

As a result of effecting the analysis of the terpolymer obtained and the measurement of physical properties, the following characteristics were obtained.

(a) Weight ratio of respective unit of ethylene/vinyl acetate/vinyl alcohol = 54.6/31.1/14.3 (measured by the infrared ray absorption analysis).

(b) Enthalpy of fusion ($\Delta$ Hm) = 0.27 cal/g (measured by the differential scanning calorimeter (DSC); rate of heating of 10°C/minute).

(c) Tensile strength at break = 259 kg/cm$^2$.


(2) Preparation of the Terpolymer Sheet and the Cross-linked Terpolymer Sheet

The EVAVAL obtained as described above was compression molded under the pressure of 20 kg/cm$^2$ at 120°C by use of metal plates coated on the surface with teflon in a heat compression molding machine to prepare a terpolymer sheet of 0.76 mm in thickness.

Next, said sheet was irradiated in air with an electron ray to reach the predetermined dosage by use of an electron ray irradiation equipment of accelerating voltage of 750 kV (scanning type, EPS 750 type, made by Nisshin High Voltage Co., Ltd.) to prepare a cross-linked terpolymer sheet.

The analytical results and the date of physical properties of the above-described terpolymer sheet and cross-linked terpolymer sheet are shown in Table 1.

As is clearly known from Table 1, it is understood that the product of the terpolymer cross-linked by means of on electron ray shows high mechanical strength and maintains high transparency in a broad

7

temperature range with high stability.

Examples 1 to 4

By using the terpolymer sheet produced in Production Example 1, and the cross-linked sheets produced in Production Examples 1 to 3, a composite glass (laminated glass) comprising such one as the intermediate layer was prepared and the physical properties thereof was measured.

That is, the terpolymer sheet or the cross-linked sheet thereof prepared in the above-described Production Examples was sandwiched between two glass plates of the thickness of 2 mm, and heated then for 10 minutes under the pressure of 20 kg/cm$^2$ by use of a compression molding machine set at a surface temperature of 120°C, to prepare a laminated glass. The laminated glass thus prepared was subjected to the anti-penetration test according to JIS R 3212. As a result, any of these laminated glass plates cleared the anti-penetration test of 4 m. Also, the peel-off amounts of the glass at that time were respectively 8g, 12g, and 11g for the laminated glass plates using the cross-linked sheets prepared in the Production Example 1 to 3. The physical properties of the laminated glass are as shown in Table 2.

Production Examples 4 to 7

The same procedures as in Production Examples 1 to 3 are carried out exception that conditions are changed as shown in Table 1 to prepare a terpolymer sheet and a cross-linked sheet thereof. The analytical results are shown in Table 1.

Examples 5 to 12

By using the terpolymer sheet and the cross-linked sheet thereof, laminated glass having these ones as the intermediate layer were prepared in the same manner as in the above-described Examples 1 to 4, and the physical properties thereof were measured. The results are shown in Table 2.

Comparative Examples 1 to 8

The sheet of an ethylene/vinyl acetate/vinyl alcohol having characteristics other than that in the range of the present invention as shown in Table 3, and the electron ray cross-linked sheet thereof are prepared in the same manner as in the above-described Example. By use of these ones, laminated glass plates were prepared in the same manner as in the above-described Example. The physical properties are shown in Table 3.

EP 0 363 813 B1

Table 1

| No. | (1) Physical properties of the EVA | | | (2) Physical properties of the EVAVAL | | | | | | |
|---|---|---|---|---|---|---|---|---|---|---|
| | Vinyl acetate unit content | Mw/Mn | MFR (g/10 min) | Saponification ratio | Vinyl acetate unit content | Vinyl alcohol unit content | OH content | $\Delta$ Hm (cal/g) | Tensile strength at break (kg/cm²) | Penetration energy of the sheet (Joule) |
| Production Example 1 | 52.0 | 2.7 | 2.8 | 47.5 | 31.1 | 14.3 | 5.56 | 0.27 | 259 | 11.0 |
| Production Example 2 | 52.0 | 2.7 | 2.8 | 47.5 | 31.1 | 14.3 | 5.56 | 0.27 | 259 | ... |
| Production Example 3 | 52.0 | 2.7 | 2.8 | 47.5 | 31.1 | 14.3 | 5.56 | 0.27 | 259 | — |
| Production Example 4 | 52.0 | 2.7 | 2.8 | 45.0 | 32.3 | 13.5 | 5.22 | ND* | 232 | 10.6 |
| Production Example 5 | 52.0 | 2.7 | 2.8 | 49.0 | 30.3 | 14.9 | 5.75 | 0.49 | 265 | 12.2 |
| Production Example 6 | 51.0 | 3.3 | 18 | 48.1 | 30.1 | 14.2 | 5.49 | 0.46 | 261 | 11.2 |
| Production Example 7 | 48.0 | 3.6 | 8.7 | 45.0 | 29.5 | 12.4 | 4.47 | 0.31 | 232 | 10.8 |

* impossible to measure

Table 1 (continued)

| No. | Total dosage of irradiation (M rad) | (3) Physical properties of the cross-linked sheet | | |
|---|---|---|---|---|
| | | Tensile strength at break (kg/cm²) | Gel fraction ratio (wt%) | Penetration energy (Joule) |
| Production Example 1 | 17 | 281 | 69.8 | 11.7 |
| Production Example 2 | 20 | 298 | 74.1 | 12.4 |
| Production Example 3 | 23 | 293 | 76.6 | 12.8 |
| Production Example 4 | 20 | 310 | 78.4 | 12.2 |
| Production Example 5 | 20 | 306 | 76.1 | 13.8 |
| Production Example 6 | 20 | 308 | 77.3 | 13.7 |
| Production Example 7 | 20 | 306 | 78.4 | 11.6 |

EP 0 363 813 B1

Table 2

| No. | Terpolymer sheet | Terpolymer cross-linked sheet | Physical properties of laminated glass | | |
|---|---|---|---|---|---|
| | | | Haze*1 | Penetration resistance*2 | |
| Example 1 | The one of the Production example 1 | — | 0.5 | 4 m | ◯ |
| Example 2 | — | The one of the Production example 1 | 0.5 | 4 m | ◯ |
| Example 3 | — | The one of the Production example 2 | 0.4 | 4 m | ◯ |
| Example 4 | — | The one of the Production example 3 | 0.4 | 4 m | ◯ |
| Example 5 | The one of the Production example 4 | — | 0.5 | 4 m | ◯ |
| Example 6 | The one of the Production example 5 | — | 0.5 | 4 m | ◯ |
| Example 7 | The one of the Production example 6 | — | 0.5 | 4 m | ◯ |
| Example 8 | The one of the Production example 7 | — | 0.5 | 4 m | ◯ |
| Example 9 | — | The one of the Production example 4 | 0.5 | 4 m | ◯ |
| Example 10 | — | The one of the Production example 5 | 0.5 | 4 m | ◯ |
| Example 11 | — | The one of the Production example 6 | 0.5 | 4 m | ◯ |
| Example 12 | — | The one of the Production example 7 | 0.5 | 4 m | ◯ |

*1: Maximum value (%) of the haze in the procedure for cooling the sample from 130°C down to 30°C.
*2: (4 m ◯) shows that the sample cleared the anti-penetration test of 4 m.

EP 0 363 813 B1

Table 3

| | Physical properties of the EVA | | | | Physical properties of the EVAVAL | | | | | |
|---|---|---|---|---|---|---|---|---|---|---|
| No. | Vinyl acetate unit content (wt%) | Mw/Mn | MFR (g/10 min) | Saponification ratio (%) | Vinyl acetate unit content (wt%) | Vinyl alcohol unit content (wt%) | OH content (wt%) | Δ Hm (cal/g) | Tensile strength at break (kg/cm²) | Penetration energy of the sheet (Joule) |
| Comparative Example 1 | 52.0 | 2.7 | 2.8 | 55 | 29.3 | 15.6 | 6.02 | 2.3 | 270 | -- |
| Comparative Example 2 | 52.0 | 2.7 | 2.8 | 30 | 39.4 | 8.66 | 3.34 | ND* | 148 | -- |
| Comparative Example 3 | 52.0 | 2.7 | 2.8 | 40 | 34.8 | 11.9 | 4.58 | ND* | 198 | -- |
| Comparative Example 4 | 44.8 | 3.55 | 2.5 | 51 | 24.8 | 13.1 | 5.05 | 29.8 | 190 | -- |
| Comparative Example 5 | 48.5 | 4.26 | 2.0 | 46 | 32.1 | 14.0 | 5.41 | 31.6 | 215 | -- |
| Comparative Example 6 | 52.0 | 2.7 | 2.8 | 0 | 52.0 | 0 | 0 | ND* | 98 | 10.2 |
| Comparative Example 7 | 52.0 | 2.7 | 2.8 | 55 | 29.3 | 15.6 | 6.02 | 2.3 | 270 | 12.4 |
| Comparative Example 8 | 33.2 | 4.2 | 21.0 | 60.5 | 14.4 | 11.3 | 4.37 | 13.8 | 238 | 8.2 |

* impossible to measure

Table 3 (continued)

| No. | Total dosage of irradiation (Mrad) | Physical properties of the cross-linked sheet | | | Physical properties of the laminated glass | |
|---|---|---|---|---|---|---|
| | | Tensile strength at break (kg/cm²) | Gel fraction ratio (wt%) | Penetration energy (Joule) | Haze*1 (%) | Penetration resistance*2 |
| Comparative Example 1 | 17 | 298 | — | 14.1 | 4.9 | ○ 4 m |
| Comparative Example 2 | 20 | 200 | — | 14.7 | 0.3 | × 4 m |
| Comparative Example 3 | 5 | 205 | 33.8 | 13.9 | 0.5 | × 4 m |
| Comparative Example 4 | 23 | 263 | — | 11.2 | 6.8 | ○ 4 m |
| Comparative Example 5 | 20 | 272 | — | 12.8 | 5.8 | ○ 4 m |
| Comparative Example 6 | — | — | — | — | 0.2 | × 4 m |
| Comparative Example 7 | — | — | — | — | 5.3 | ○ 4 m |
| Comparative Example 8 | — | — | — | — | 11.6 | ○ 4 m |

*1: same as in Table 2
*2: (4 m ○) shows that the sample cleared the anti-penetration test of 4 m, and
(4 m ×) shows that the sample did not clear the anti-penetration test of 4 m.

## Claims

1. A terpolymer having excellent optical properties which comprises an ethylene/vinyl acetate/vinyl alcohol terpolymer obtainable by uniformly partially saponifying an ethylene/vinyl acetate copolymer,
   (A) said copolymer being defined as:

13

(1) the content of the units derived from vinyl acetate of 46 to 53 wt%;

(2) the MFR of 1 to 20 g/10 minutes (wherein MFR denotes a melt flow index measured at 190°C);

(3) the polydispersion index Mw/Mn of not more than 4.0 (wherein Mw denotes the weight average molecular weight, and Mn denotes the number average molecular weight);

(4) the comonomer distribution ratio of the ethylene chain in the triad, measured by the nuclear magnetic resonance method of the isotope carbon $^{13}$C of not more than 50 mol%; and

(B) said terpolymer being defined as:

(5) the content of the units derived from vinyl alcohol of 12.4 to 15.2 wt%;

(6) substantially amorphous with an enthalpy of fusion ($\Delta$Hm) of not more than 0.5 cal/g.

2. A terpolymer cross-linked product having excellent optical properties and mechanical strength, formed by cross-linking the terpolymer of Claim 1.

3. A terpolymer cross-linked sheet having excellent optical properties and mechanical strength formed by cross-linking the terpolymer of Claim 1 by irradiating it with an ionizing radiation up to the gel fraction ratio of more than 55%.

4. A terpolymer cross-linked sheet as claimed in Claim 3, wherein the ionizing radiation is electron bombardment

5. A transparent laminate formed by sandwiching the terpolymer of Claim 1 between a plural number of transparent materials comprising at least one kind of selected from the glasses and synthetic resins.

6. A transparent laminate formed by sandwiching the terpolymer cross-linked product of Claim 2 between a plural number of transparent materials comprising at least one kind selected from glasses and synthetic resins.

7. A transparent laminate formed by sandwiching the copolymer cross-linked sheet of Claim 3 between a plural number of transparent materials comprising at least one kind selected from glasses and synthetic resins.

8. A transparent laminate formed by sandwiching the terpolymer cross-linked sheet with a gel fraction ratio of more than 55%, made by cross-linking the terpolymer of Claim 1 with ionizing radiation, between a plural number of transparent materials comprising glass plates.

9. A transparent laminate claimed in Claim 7, wherein the ionizing radiation is electron bombardment.

10. A transparent laminate claimed in Claim 8, wherein the ionizing radiation is electron bombardment.

**Patentansprüche**

1. Terpolymer mit hervorragenden optischen Eigenschaften, das ein Ethylen/Vinylacetat/Vinylalkohol-Terpolymer umfaßt, erhältlich durch gleichmäßiges partielles Verseifen eines Ethylen/Vinylacetat-Copolymeren, wobei

(A) das Copolymer so definiert ist, daß:

(1) der Gehalt der aus dem Vinylacetat stammenden Einheiten 46 bis 53 Gew.-% beträgt,

(2) die MFR 1 bis 20 g/10 Minuten beträgt (wobei MFR einen bei 190 °C bestimmten Schmelzflußindex bedeutet),

(3) der Polydispersionsindex Mw/Mn nicht mehr als 4,0 beträgt (wobei Mw das Gewichtsmittel des Molekulargewichts bedeutet und Mn das Zahlenmittel des Molekulargewichts bedeutet),

(4) das Verhältnis der Comonomerenverteilung der Ethylenkette in der Triade, bestimmt durch das kernmagnetische Resonanzverfahren des Kohlenstoffisotops $^{13}$C, nicht mehr als 50 Mol-% beträgt, und

(B) das Terpolymer definiert so ist, daß:

(5) der Gehalt der von dem Vinylalkohol stammenden Einheiten 12,4 bis 15,2 Gew.-% beträgt,

(6) es im wesentlichen amorph ist und eine Fusionsenthalpie ($\Delta$Hm) von nicht mehr als 0,5 cal/g aufweist.

14

**2.** Quervernetzes Terpolymerprodukt, das hervorragende optische Eigenschaften und mechanische Festigkeit aufweist, gebildet durch Quervernetzen des Terpolymers von Anspruch 1.

**3.** Quervernetzte Terpolymerfolie, die ausgezeichnete optische Eigenschaften und mechanische Festigkeit aufweist, die durch Quervernetzen des Terpolymeren von Anspruch 1 durch Bestrahlen mit einer ionisierenden Strahlung bis zu einem Gelfraktionsverhältnis von mehr als 55 % gebildet wird.

**4.** Quervernetzte Terpolymerfolie nach Anspruch 3, wobei die ionisierende Strahlung ein Elektronenbombardment ist.

**5.** Transparentes Laminat, das durch sandwichartiges Anordnen des Terpolymeren von Anspruch 1 zwischen mehreren transparenten Materialien, die mindestens eine Art ausgewählt aus Gläsern und synthetischen Harzen, umfassen.

**6.** Transparentes Laminat, gebildet durch sandwichartiges Anordnen des quervernetzten Terpolymerprodukts von Anspruch 2 zwischen mehreren transparenten Materialien, die mindestens eine Art ausgewählt aus Gläsern und synthetischen Harzen, umfassen.

**7.** Transparentes Laminat, gebildet durch sandwichartiges Anordnen der quervernetzten Copolymerfolie von Anspruch 3 zwischen mehreren transparenten Materialien, die mindestens eine Art ausgewählt aus Gläsern und synthetischen Harzen, umfassen.

**8.** Transparentes Laminat, gebildet durch sandwichartiges Anordnen der quervernetzten Terpolymerfolie mit einem Verhältnis der Gelfraktion von mehr als 55 %, hergestellt durch Quervernetzen des Terpolymeren von Anspruch 1 durch ionisierende Strahlung, zwischen mehreren transparenten Materialien, die Glasscheiben umfassen.

**9.** Transparentes Laminat nach Anspruch 7, wobei die ionisierende Strahlung Elektronenbombardment ist.

**10.** Transparentes Laminat nach Anspruch 8, wobei die ionisierende Strahlung Elektronenbombardment ist.

**Revendications**

**1.** Terpolymère ayant d'excellentes propriétés optiques qui comprend un terpolymère éthylène/acétate de vinyle/alcool vinylique qu'on peut obtenir par saponification partielle uniforme d'un copolymère éthylène/acétate de vinyle
　　(A) ledit polymère étant défini par :
　　　　(1) la teneur en unités dérivées de l'acétate de vinyle de 46 à 53% en poids ;
　　　　(2) le MFR de 1 à 20 g/10 minutes (dans lequel MFR représente le "melt flow index" (indice d'écoulement de masse fondue) mesuré à 190°C) ;
　　　　(3) l'indice de polydispersion $M_w/M_n$ ne dépassant pas 4,0 (dans lequel $M_w$ représente le poids moléculaire moyen en poids, et $M_n$ représente le poids moléculaire moyen en nombre) ;
　　　　(4) la proportion de distribution en comonomère de la chaîne éthylène dans la triade, mesurée par le procédé de résonance magnétique nucléaire de l'isotope de carbone $^{13}C$ ne dépassant pas 50% molaire ; et
　　(B) ledit terpolymère étant défini par :
　　　　(5) la teneur en unités dérivées de l'alcool vinylique de 12, 4 à 15,2% en poids ;
　　　　(6) l'état sensiblement amorphe avec une enthalpie de fusion ($\Delta Hm$) ne dépassant pas 0,5 cal/g.

**2.** Produit terpolymère réticulé ayant d'excellentes propriétés optiques et résistance mécanique, formé par réticulation du copolymère de la revendication 1.

**3.** Feuille de terpolymère réticulé ayant d'excellentes propriétés optiques et résistance mécanique formée par réticulation du terpolymère de la revendication 1 par irradiation avec une radiation ionisante jusqu'à une proportion de gel dépassant 55%.

**4.** Feuille de terpolymère réticulé selon la revendication 3, dans laquelle la radiation ionisante est un bombardement électronique.

**5.** Stratifié transparent formé en plaçant en sandwich le terpolymère de la revendication 1 entre plusieurs matériaux transparents comprenant au moins une espèce sélectionnée parmi les verres et les résines synthétiques.

**6.** Stratifié transparent formé en plaçant en sandwich le produit de terpolymère réticulé de la revendication 2 entre plusieurs matériaux transparents comprenant au moins une espèce sélectionnée parmi les verres et les résines synthétiques.

**7.** Stratifié transparent formé en plaçant en sandwich la feuille de polymère réticulé de la revendication 3 entre plusieurs matériaux transparents comprenant au moins une espèce sélectionnée parmi les verres et les résines synthétiques.

**8.** Stratifié transparent formé en plaçant en sandwich la feuille de terpolymère réticulé ayant une proportion de gel supérieure à 55%, réalisée par réticulation du terpolymère de la revendication 1 par des radiations ionisantes, entre plusieurs matériaux transparents comprenant des plaques de verre.

**9.** Stratifié transparent selon la revendication 7, dans lequel la radiation ionisante est un bombardement électronique.

**10.** Stratifié transparent selon la revendication 8, dans lequel la radiation ionisante est un bombardement électronique.